# FASCICULE DE BREVET EUROPEEN

(11) **EP 0 545 744 B1**
(45) Date de publication et mention de la délivrance du brevet: **24.05.1995**
(21) Numéro de dépôt: 92402916.8
(22) Date de dépôt: 26.10.1992
(51) Int. Cl.: G06F 9/46

(54) **Procédé pour le test et, éventuellement, la validation des primitives d'un exécutif temps réel**
Verfahren zum Testen und gegebenenfalls zur Bewertung von Primitiven eines Echtzeitsteuerprogrammes
Method for testing, and if desired, for the validation of the primitives of a real-time executive

(30) Priorité: 29.11.1991 FR 9115107
(43) Date de publication de la demande: 09.06.1993
(73) Titulaire: SEXTANT AVIONIQUE, F-92366 Meudon la Forêt Cédex (FR)
(72) Inventeur: Siruguet, Benoît, F-92370 Chaville (FR)
(74) Mandataire: de Saint-Palais, Arnaud Marie

(56) Documents cités:
- EP-A- 0 251 584
- EP-A- 0 264 317
- EP-A- 0 274 339
- DE-A- 2 558 910
- ACM TRANSACTIONS ON COMPUTER SYSTEMS vol. 5, no. 3, Août 1987, NEW YORK US pages 189 - 231 SCHWAN 'High-Performance Operating System Primitives for Robotics and Real-Time Control Systems'

## Description

### PROCEDE POUR LE TEST ET, EVENTUELLEMENT, LA VALIDATION DES PRIMITIVES D'UN EXECUTIF TEMPS REEL.

La présente invention concerne un procédé pour le test et, éventuellement, la validation des primitives d'un exécutif temps réel, c'est-à-dire d'un dispositif logiciel, matériel et/ou microprogrammé, apte à exécuter plusieurs tâches sur un processeur conçu pour n'exécuter qu'une seule tâche à la fois.

Elle intéresse, d'une part, les entreprises qui conçoivent et développent des exécutifs temps réel tels que des constructeurs de calculateurs et de microprocesseurs, des constructeurs de compilateurs de langage temps réel, des producteurs de systèmes informatiques ou des industriels développant des applications temps réel avec leur propre exécutif et, d'autre part, des industriels développant des applications temps réel notamment dans les domaines suivants : aéronautique, spatial, nucléaire, ferroviaire, médical, robotique, etc...

Dans le premier cas, ces entreprises ont besoin de valider leur produit avant de le commercialiser. Dans le deuxième cas, ces entreprises ont besoin d'évaluer et de vérifier le fonctionnement des exécutifs proposés sur le marché afin de choisir le plus adapté à leurs besoins et le plus digne de confiance.

On rappelle que chaque tâche d'un exécutif temps réel est assimilable à un flot d'instructions autonomes ("thread of control") qui s'exécute sur le processeur en utilisant l'ensemble des ressources de la machine nécessaires à son exécution : registres, mémoires, périphériques, temps d'exécution, ...

Les tâches sont, a priori, indépendantes. Elles peuvent se synchroniser, communiquer ou s'exclure selon des mécanismes offerts par l'exécutif. Lorsque les tâches sont implantées sur un seul processeur physique, elles s'exécutent en fait en pseudo-parallélisme car le processeur ne peut exécuter qu'une instruction à la fois.

Il y a synchronisation de deux tâches A et B, lorsque la tâche A attend (pour poursuivre son exécution) que la tâche B la libère d'où une idée d'ordre d'exécution des tâches les unes par rapport aux autres. Le schéma type est celui du Producteur/Consommateur où la tâche consommatrice attend (pour consommer) que la tâche productrice ait produit.

Il y a communication entre deux tâches A et B, lorsque la tâche A utilise des données créées par la tâche B. Le schéma type est aussi celui du Producteur/Consommateur où la tâche consommatrice attend (pour consommer) ce que la tâche productrice a produit.

Il y a exclusion entre deux tâches A et B, lorsque la tâche A n'est pas autorisée à utiliser une ressource en même temps que la tâche B. Par conséquent, la tâche A doit attendre que la tâche B n'utilise plus la ressource pour pouvoir l'utiliser à son tour.

Une tâche peut être placée dans différents états, tels que, par exemple :
- L'état "tâche morte" (connue de l'application mais qui n'a pas d'attache avec son contexte de lancement) : Lors d'une anomalie grave, une ou des tâches peuvent ne plus pouvoir s'exécuter. Elles sont alors placées dans l'état "morte" et ne sont plus gérées.
- L'état "tâche dormante". Dans cet état, qui est celui d'une tâche ayant terminée son exécution ou venant d'être initialisée, la tâche possède tous les paramètres pour démarrer son application.
- L'état "tâche éligible" dans lequel la tâche est en attente de ressource processeur et peut s'exécuter dès que l'ordonnanceur décide de lui attribuer un processeur.
- L'état "tâche élue" qui est le fait d'une tâche qui a obtenu la possession du processeur en passant de l'état "éligible" à l'état "élue".
- L'état "tâche suspendue" qui est le fait d'une tâche élue rencontrant une condition non satisfaite, cette tâche passant à l'état éligible quand cette condition se trouve remplie.

A ce dernier titre, elle peut être en attente d'un événement si elle a sous-traité une opération à une autre tâche du système et attend que celle-ci soit terminée. Elle peut être en attente d'une ressource, au sens général, si elle a besoin pour poursuivre son exécution d'une unité matérielle ou logicielle qui n'est pas disponible.

Il apparaît donc que les différentes tâches d'un exécutif ne sont pas, en général, complètement indépendantes et ont besoin, par moment, de se synchroniser, de se communiquer des données et d'accéder à des ressources non partageables.

Ainsi, par exemple, une tâche peut être préemptée au profit d'une autre tâche suivant les critères choisis pour l'ordonnancement. Si la tâche rencontre, au cours de son exécution, une primitive de suspension inconditionnelle ou une condition non satisfaite la concernant, notamment sur délai, sur écriture dans une boîte aux lettres pleine, sur lecture dans une boîte aux lettres vide, ou sur événement, elle abandonne le processeur au profit d'une autre tâche.

Pour tenir compte de ces particularités et pour permettre un tel déroulement, l'exécutif offre (au programmeur) un ensemble de primitives de synchronisation, de communication et de partage des ressources. L'utilisation de ces primitives aux seuls endroits nécessaires de l'application multitâche, permet aux différentes tâches de s'exécuter de façon asynchrone les unes des autres.

C'est dans cet asynchronisme que se pose le problème de la validation des applications temps réel et, par voie de conséquence, celui de la validation des exécutifs eux-mêmes.

En effet, contrairement à un déroulement synchrone, un programme ayant un déroulement asynchrone par le biais des tâches qui le composent, passe par un nombre non dénombrable d'états (au moins d'un point de vue humain) et, par conséquent, la preuve de la cohérence de ces états ne peut être établie.

Ceci tient notamment au fait que lors de la réalisation d'un programme, à chaque point du programme, le programmeur maîtrise l'état dans lequel il se trouve et détermine l'état suivant en fonction de l'instruction qui sera exécutée. Ce raisonnement est appliqué de la première à la dernière instruction du programme en fixant les données d'entrée du programme et permet donc de prédire les résultats attendus.

L'état du programme est grosso modo représenté par la valeur de chacune de ses variables à un instant donné et à un emplacement donné (respectivement désignés par l'horloge interne et par le compteur d'instructions).

Lorsque le programme possède plusieurs tâches, le raisonnement peut être appliqué à chacune des tâches à condition que les changements de tâches soient maîtrisés par le programmeur dans l'espace et dans le temps. Si cette condition n'est plus remplie, le programmeur n'est plus capable de déterminer l'enchaînement exact des états de son programme.

Le programme est alors qualifié non-déterministe (passant par un nombre infini d'états).

En fait, on maîtrise habituellement les changements de tâches quand ils ont lieu en des points privilégiés du programme, typiquement lors de l'appel de primitive de l'exécutif. L'exécutif est alors réputé "non préemptif".

Il s'avère que la plupart des exécutifs temps réel sont préemptifs et ne permettent pas de maîtriser ces changements, et que l'approche que le programmeur utilise pour valider un logiciel déterministe n'est que partiellement applicable à la validation d'un logiciel non déterministe.

L'invention a donc plus particulièrement pour but la mise au point d'une solution qui permette de résoudre ces problèmes.

A cet effet, l'invention part de la constatation que tous les exécutifs temps réel n'offrent pas le même jeu de primitives, que les mécanismes qu'ils proposent pour réaliser des synchronisations, des communications, etc diffèrent, mais que tous permettent une exécution concurrente de tâches coopérantes.

Elle propose à cet effet, d'une façon générale, un procédé pour le test des primitives d'un exécutif temps réel permettant d'exécuter plusieurs tâches en parallèle sur un processeur conçu pour n'exécuter qu'une seule tâche à la fois, chaque tâche utilisant l'ensemble des ressources de la machine nécessaires à son exécution, et ce, grâce à un ensemble de primitives de synchronisation et de partage des ressources qui permettent aux différentes tâches de s'exécuter, de façon asynchrone.

Selon l'invention, ce procédé est caractérisé en ce qu'il consiste à mettre en oeuvre une pluralité de tâches coopérantes, à savoir :
- un ensemble de tâches concurrentes, bâties sur un même modèle et qui ne diffèrent les unes des autres que par leur contexte statique à savoir leur désignation et leur priorité, chacune de ces tâches concurrentes pouvant effectuer une suite d'actions de deux types, déterminées aléatoirement, à savoir : des actions engendrant une progression dans le déroulement de la tâche et des actions consistant en des attentes ;
- une tâche conductrice qui organise la mise en oeuvre des tâches concurrentes et qui règle plus particulièrement le lancement des tâches concurrentes, qui active leur déroulement et qui détecte leur achèvement ; et
- une tâche serveur de ressource interne, telle qu'un distributeur de nombres aléatoires.

Ladite mise en oeuvre comportant :
- la détermination des priorités respectives des tâches, de manière à répartir leur activité dans le temps et à créer un maximum de cas différents de préemption,
- une phase préalable comportant :
   . une initialisation de l'horloge temps réel,
   . le lancement de la tâche conducteur,
   . la création de l'ensemble des objets temps réel nécessaires,
   . le lancement des tâches serveur,
- une succession de phases opératoires, au cours de chacune desquelles la tâche conductrice fait concourir les tâches concurrentes selon un même parcours, cette succession de phases comportant :
   . le choix aléatoire d'un mode de lancement des tâches concurrentes, parmi différents modes de lancements préétablis,
   . le lancement des tâches concurrentes selon le mode de lancement choisi, au moyen de primitives choisies aléatoirement, dans un ordre choisi au hasard, chacune des tâches, une fois lancée, tirant au hasard les susdites actions,
   . la libération des tâches concurrentes, de leur condition d'attente, soit par un épuisement des délais qui les bloquent, soit par un tirage aléatoire de numéros d'événements publics ou privés qui libèrent les tâches concurrentes en attente de ces événements,
   . la détection de l'arrivée de chacune des tâches concurrentes en fin de parcours,
   . la prise en compte et la mémorisation de paramètres caractéristiques de la phase opératoire qui vient de se dérouler,
   . la modification de l'ordre dans lequel les tâches opératoires vont être relancées au cours de la phase opératoire suivante,
   . le lancement de la phase opératoire suivante,
   . l'analyse des susdits paramètres pendant le déroulement des susdites phases opératoires et/ou à l'achèvement de celles-ci.

Selon ce procédé, les phases opératoires ne se répètent jamais et doivent aboutir. L'exécution perpétuelle de ces phases opératoires tient lieu de validation. Le non-enchaînement des courses signifie une anomalie.

L'une des particularités du procédé précédemment décrit consiste en ce que, dans un contexte temps réel préemptif, il permet de tester d'un seul coup un maximum de primitives, en fournissant un résultat très simple à vérifier.

Il s'agit là d'un avantage particulièrement important, et ce, pour les raisons suivantes :

Une première raison résulte du fait que si les primitives d'un exécutif sont testées une par une ou par groupe indissociable, le test est édulcoré car il ne crée aucune situation délicate à l'intérieur de l'exécutif. Il se contente de vérifier la bonne passation des arguments et le bon fonctionnement procédural des primitives lors d'un déroulement quasi-séquentiel. De ce fait, il s'assimile à un test unitaire du type de celui qui a été déjà réalisé par le fournisseur de l'exécutif.

Une deuxième raison consiste en ce que l'application finale, par opposition à l'application de test, utilise un sous-ensemble de primitives plus important que dans un test unitaire sans qu'il soit toujours possible de déterminer à l'avance quels seront ses choix.

Grâce au fait qu'il permet de tester l'ensemble des primitives de l'exécutif dans la même application, le procédé selon l'invention couvre les conditions d'utilisation de l'exécutif par l'application finale. Dans le cas où ces tests sont positifs, on obtient donc une garantie de bon fonctionnement. Ce résultat va bien au-delà de celui obtenu par un test d'intégration qui ne teste l'exécutif que dans les conditions d'utilisation propres à une seule application.

L'invention sera mieux comprise à la lecture de la description ci-après qui décrit un mode de mise en oeuvre du procédé de test, ainsi que des éléments de programmation utilisés pour la validation des boîtes aux lettres et de l'exécutif temps réel d'un calculateur de la SERIE 7000 développé par la Demanderesse, cet exemple étant illustré par les dessins annexés dans lesquels :

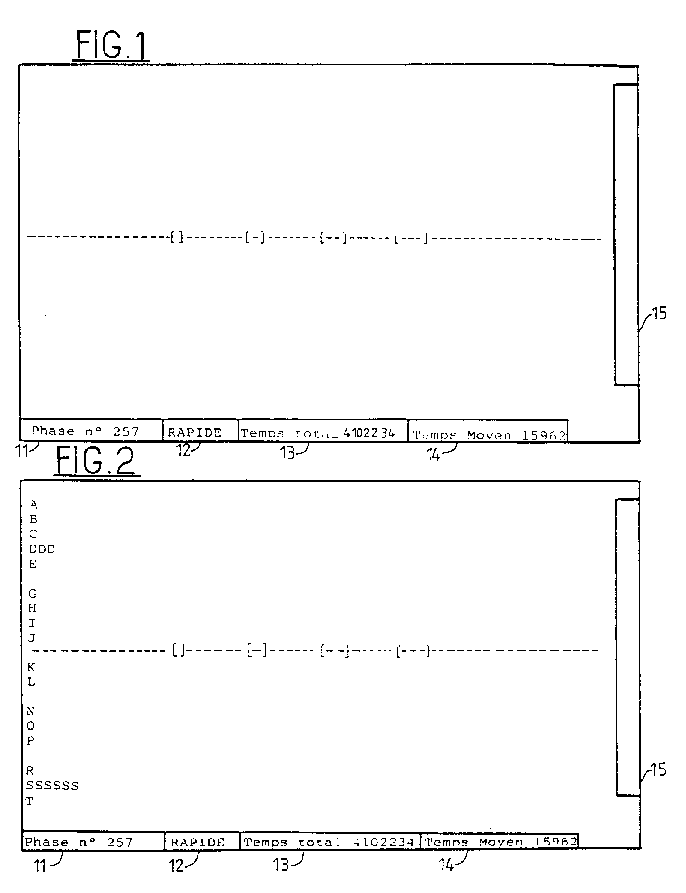

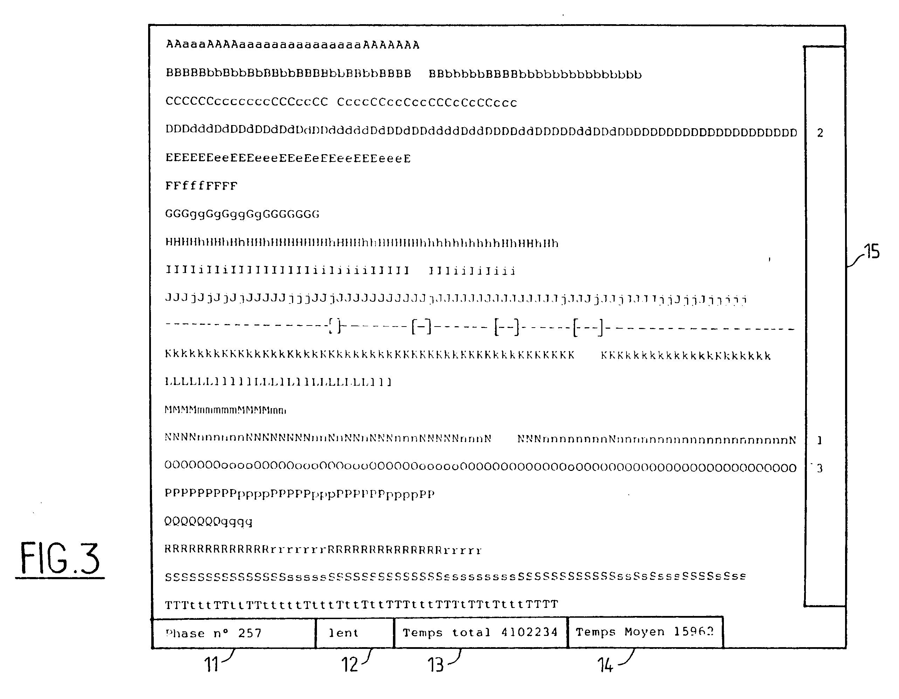

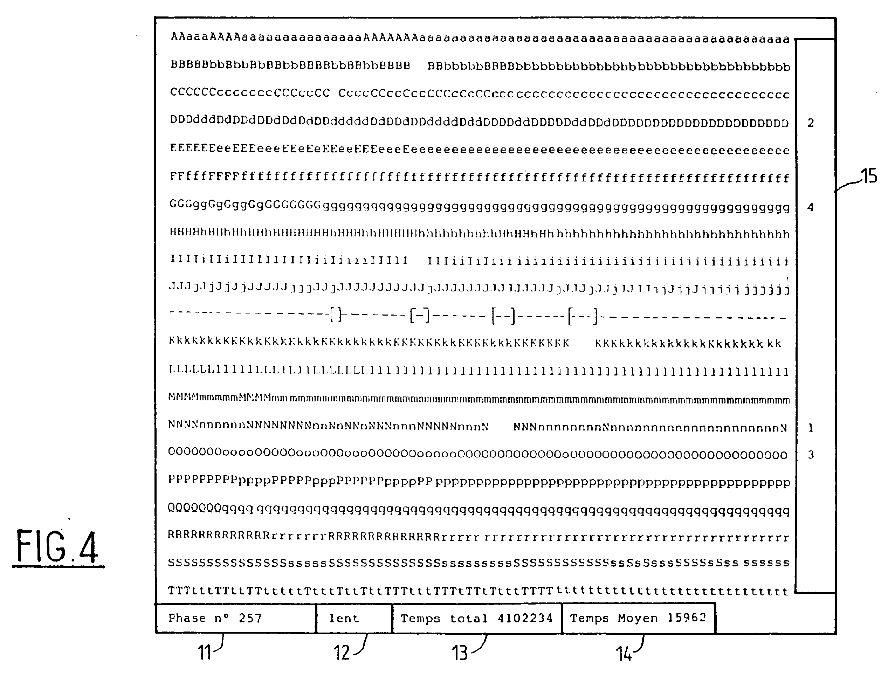

Les figures 1 à 4 sont des représentations graphiques montrant les progressions des tâches concurrentes au cours d'une même phase opératoire, à savoir : juste avant la phase opératoire (figure 1), au début de la phase opératoire (figure 2), au milieu de la phase opératoire (figure 3) et à la fin de la phase opératoire (figure 4).

Il convient de rappeler tout d'abord qu'un exécutif est dit temps réel, lorsqu'il peut garantir un temps de réponse à l'arrivée d'un événement extérieur périodique (synchrone) ou apériodique (asynchrone), grâce à la connaissance du temps qui s'écoule et qui est mesuré par une horloge, et à des priorités affectées aux différentes tâches, et au caractère préemptif ou non de l'exécutif.

Lorsque deux tâches sont de priorités différentes, un exécutif non préemptif favorise l'exécution de la tâche la plus prioritaire. Un exécutif préemptif s'assure, quant à lui, à tout moment, que la tâche la plus prioritaire parmi les tâches exécutables, s'exécute effectivement. Lorsqu'une tâche de priorité plus élevée voit sa condition d'attente disparaître, elle préempte la tâche en cours d'exécution pour s'exécuter à son tour.

Le procédé selon l'invention propose de tester les primitives d'un exécutif temps réel en faisant concourir un ensemble de tâches coopérantes dites tâches concurrentes bâties sur un même modèle, au cours d'une pluralité de phases opératoires, assimilables chacune à une course. Ces phases opératoires sont différentes les unes des autres grâce aux tirages aléatoires du mode de lancement et des actions engendrant une progression ou une attente dans le déroulement des tâches.

En fait, ce processus est destiné à créer une multiplicité d'applications multitâche dans lesquelles on trouve des occasions d'utiliser les différents services d'un exécutif.

Les phases opératoires sont gérées par une tâche conductrice (conducteur de course) qui donne le coup d'envoi et lance les tâches concurrentes en choisissant aléatoirement pour chacune de ces tâches, un mode de lancement déterminé pris parmi un ensemble de modes de lancement prévus à l'avance, tels que :
- lancement immédiat inconditionnel,
- lancement différé en attente d'un événement,
- lancement différé en attente d'un délai, lui-même aléatoire,
- etc.

Non seulement les tâches concurrentes sont lancées par une primitive choisie au hasard, mais l'ordre dans lequel ces tâches sont lancées est également choisi au hasard.

Une fois les tâches concurrentes lancées, la tâche conductrice surveille les registres d'arrivée (achèvement) des tâches concurrentes.

Une fois lancée, chaque tâche concurrente va se voir attribuer au hasard des actions de deux types différents, à savoir : des actions d'un premier type qui consistent en une progression, et des actions d'un second type qui consistent en une attente.

Ainsi, aléatoirement, une tâche concurrente pourra faire plusieurs pas successifs avant de s'arrêter.

Tant que la totalité des tâches concurrentes n'est par parvenue à son achèvement (fin de la phase opératoire) la tâche conductrice libère les tâches concurrentes de leur condition d'attente, et ce, de la façon suivante :
- elle tire aléatoirement des numéros d'événements publics ou privés et provoque l'arrivée de ces événements, libérant ainsi les tâches concurrentes qui pouvaient les attendre,
- les délais qui bloquent les tâches concurrentes s'épuisent d'eux-mêmes,
- du fait qu'elle est la moins prioritaire (tâche de fond) elle ne reprend la main que lorsque toutes les autres tâches sont bloquées.

Quand toutes les tâches concurrentes sont achevées (arrivées à destination) la tâche conductrice modifie aléatoirement l'ordre dans lequel ces tâches vont être relancées pour la phase opératoire suivante.

Il apparaît clairement que le procédé précédemment défini permet d'évaluer les performances d'un exécutif sur un processeur donné.

En effet, la mesure du temps cumulé au fur et à mesure des phases opératoires et la durée moyenne d'une phase opératoire (recalculée après chacune desdites phases) sont des paramètres intéressants à étudier : Ils permettent d'effectuer au niveau macroscopique des comparaisons, des détections d'anomalie et même des ajustements. Ce procédé ne peut pas en effet mesurer le temps d'une primitive déterminée, mais il permet d'apprécier une performance globale.

Un autre avantage du procédé selon l'invention consiste en ce qu'il permet à un réalisateur d'exécutif de comparer différentes solutions.

Outre les tâches concurrentes et la tâche conductrice, le procédé selon l'invention peut faire intervenir au moins une tâche serveur de ressource externe (périphérique) telle qu'une tâche de gestion d'un écran, une tâche serveur de ressource interne (calcul) telle que le distributeur de nombres aléatoires utilisés dans le procédé, et une tâche cyclique.

En effet, la progression des tâches concurrentes peut être avantageusement figurée sur un écran de visualisation de type classique par exemple de 24 lignes/80 colonnes pouvant être adressé en XY. Comme cet écran constitue une ressource non partageable, il se trouve donc géré par la tâche de type serveur qui regroupe et traite dans l'ordre d'arrivée toutes les demandes de visualisation qui lui parviennent des autres tâches.

Ainsi, par exemple, les demandes lui arrivent sous la forme de messages déposés dans une boîte aux lettres. Les tâches préparent leur message et l'envoient (primitive "SEND") dans la boîte. Si la boîte est pleine, les tâches sont bloquées en attendant de pouvoir déposer leur message et reprendre la main. De son côté, la tâche serveur de ressources externes ("DISPLAY_TASK") boucle sur la réception de message (primitive "RECEIVE") et le traitement du message reçu. Si la boîte est vide, la tâche serveur est bloquée en attente de recevoir un nouveau message. Ces messages décrivent le type d'entrée/sortie qui doit être réalisé pour le compte de la tâche appelante. Typiquement, les messages contiennent les informations suivantes :
- le numéro de ligne et le numéro de colonne d'écran,
- le type (entier, caractère, chaîne de caractères, ...),
- la valeur de l'entier, du caractère ou de la chaîne de caractères.

L'indivisibilité de la suite de caractères émis vers le périphérique est assurée par cette tâche serveur de ressources externes qui traite complètement une demande avant de prendre en compte la demande suivante, et ce, quelle que soit la priorité des tâches appelantes.

La tâche distributeur de nombres aléatoires ("RANDOM_TASK") se charge de distribuer les nombres aléatoires utilisés par les tâches. En effet, au lieu de prévoir des tâches possédant leur propre générateur de nombres aléatoires, il s'est avéré préférable de faire une tâche de type serveur qui calcule et fournit tous les nombres aléatoires demandés par l'ensemble des tâches.

Ainsi, par exemple, les nombres aléatoires sont déposés dans une boîte aux lettres ("RANDOM_BOX"). Les tâches qui désirent obtenir un nombre se mettent en réception sur la boîte (primitive "RECEIVE"). Si la boîte est vide, les tâches appelantes sont bloquées en attendant de pouvoir extraire un nombre et poursuivre leur exécution. De son côté, la tâche serveur de ressources internes ("RANDOM_TASK"), ici une tâche distributeur de nombres aléatoires boucle sur le calcul d'un nombre aléatoire et l'envoi du nombre (primitive "SEND") dans la boîte. Si la boîte est pleine, la tâche serveur est bloquée en attente de pouvoir déposer un nouveau nombre.

La tâche cyclique, complètement indépendante des autres tâches, impose de façon périodique, deux régimes de vitesse qui influent sur le déroulement des tâches concurrentes lors des différentes phases opératoires.

Cette tâche cyclique utilise, par exemple, un événement "SPEED_EV" qu'elle bascule à chaque nouveau cycle. Elle utilise pour cela trois primitives :
- une première primitive "TEST_EVENT" pour connaître l'état dans lequel il se trouve,
- une deuxième primitive "SET_EVENT" pour le mettre à l'état arrivé (vitesse lente),
- une troisième primitive "RESET_EVENT" pour le mettre à l'état non-arrivé (vitesse rapide).

Comme cette tâche est cyclique et ne peut pas se permettre de prendre le moindre retard, elle affiche son état (vitesse rapide/lente) par un message envoyé conditionnellement (primitive "TEST_AND_SEND") vers le serveur d'écran.

Toutes les tâches précédemment évoquées jouent un rôle important, en ce sens qu'elles ont un travail substantiel à faire qui représente un taux non négligeable d'occupation du processeur.

En outre, les priorités respectives de ces tâches sont réglées de façon à répartir leur activité dans le temps et à créer un maximum de cas différents de préemption. Comme précédemment mentionné, la tâche conductrice est la moins prioritaire, puisque c'est la tâche de fond. La tâche serveur de ressource externe ("DISPLAY_TASK") est un niveau plus prioritaire, puis viennent les tâches concurrentes qui sont réparties de préférence sur plusieurs niveaux de priorité croissants. La tâche serveur de ressource interne ("RANDOM_TASK") a un niveau de priorité correspondant sensiblement au niveau moyen des priorités des tâches concurrentes. La tâche cyclique ("SPEED_TASK") se voit attribuer la plus haute priorité, pour garantir sa cyclicité.

Dans cet exemple, les tâches concurrentes sont au nombre de vingt, regroupées en deux groupes de dix dans chacun desquels les tâches concurrentes ont des priorités allant en décroissant, les valeurs moyennes des priorités (force) de ces deux groupes étant sensiblement égales.

Chaque tâche est représentée à l'écran par une simple lettre ( ou une série de lettres identiques présentées sous la forme d'un histogramme) qui se déplace le long d'un parcours de 77 pas élémentaires (piste) au fur et à mesure de l'avancement de la tâche. Le premier groupe comprend les tâches A à J, tandis que le second groupe comprend les tâches K à T.

La phase préalable du procédé selon l'invention comprend ici, dans l'ordre :
- l'initialisation de l'horloge temps réel de l'exécutif,
- le lancement de la tâche conductrice,
- la création de l'ensemble des objets temps réels nécessaires tels que les boîtes aux lettres,
- le lancement des deux tâches serveur (gérant d'écran et distributeur de nombres aléatoires).

Au départ de la phase opératoire, la tâche conducteur efface l'écran, affiche le parcours que doit suivre chacune des tâches (figure 1) ainsi que des renseignements d'ordre général, tels que :
- le numéro de la prochaine phase opératoire (ou course),
- le temps total des phases opératoires déjà réalisées,
- le temps moyen d'une phase opératoire,
- etc.

Les parcours de chacune des tâches concurrentes peuvent comprendre des "obstacles" communs gérés en ressource non partageable, chacun de ces "obstacles" ne pouvant être franchi que par une seule tâche concurrente à la fois. Lorsqu'une tâche se trouve face à un obstacle, elle doit attendre pour le franchir que l'obstacle se libère. A cet effet, en arrivant sur un obstacle, chaque tâche demande l'accès à la ressource correspondante par une primitive "RESERVE" ou par une primitive "TEST_AND_RESERVE", selon le cas, et libère en fin d'obstacle la ressource qu'elle occupait, par une primitive "FREE". Eventuellement, une tâche concurrente pourra, par exemple, franchir un obstacle occupé sans attendre qu'il se libère, si elle obtient un bonus par tirage aléatoire et si la tâche cyclique affiche une condition déterminée (par exemple vitesse rapide).

Chaque tâche concurrente effectue sa progression jusqu'à ce qu'elle atteigne la fin du parcours (ligne d'arrivée). Dans ce dernier cas, les tâches concurrentes inscrivent leur nom sur un registre qui est consulté en permanence par la tâche conductrice pour détecter la fin d'une phase opératoire, en vue d'en relancer une nouvelle. Ainsi, par exemple, les tâches concurrentes ayant passé la ligne d'arrivée déposent (primitive "SEND") dans une boîte aux lettres ("AT_END_BOX") leur code d'identification, attestant par là-même qu'elles ont bien terminé leur parcours et ne sont pas restées bloquées en chemin. De son côté, la tâche conductrice extrait les codes d'identification des tâches concurrentes qui peuvent s'être inscrites depuis sa dernière consultation (primitive "TEST_AND_RECEIVE").

Les tâches sont classées selon leur ordre d'arrivée en fin de parcours. De la même manière que précédemment, la tâche conductrice envoie dans la boîte aux lettres adéquate (tâche "RANK_BOX") le nombre de classements, a priori, retenus avant le démarrage des tâches concurrentes, les dernières tâches arrivées n'étant pas départagées. Dans cet exemple, seules les quatre premières tâches concurrentes sont classées, étant entendu que ce type de classement est purement arbitraire. Comme précédemment mentionné, la tâche conductrice surveille le registre d'arrivée des tâches concurrentes et, tant qu'elle n'a pas son compte signifiant que la phase opératoire est terminée, elle va elle-même libérer les tâches concurrentes de leur condition d'attente de la façon suivante : elle tire aléatoirement des numéros d'événements publics ou privés et provoque l'arrivée de ces événements, libérant ainsi les tâches concurrentes qui pouvaient les attendre. Les délais qui bloquent les tâches concurrentes s'épuisent d'eux-mêmes. Ainsi, par exemple, les tâches concurrentes se bloquent grâce à des primitives "WAIT_DELAY" et "WAIT_EVENT". Les attentes sur événement se font, soit sur un événement privé attaché à chaque tâche concurrente ("CONCUR_EV"), soit sur un événement public commun à toutes les tâches concurrentes "DRIVER_EV". La tâche conductrice débloque ces tâches par la primitive "PULSE_EVENT" sur ces événements.

En tant que tâche de fond, la tâche conductrice ne reprend la main que lorsque toutes les autres tâches sont bloquées (autrement dit, lorsqu'il n'y a rien de mieux à faire, on décide de faire progresser la phase opératoire).

Si l'exécutif offre une primitive d'arrêt de périodicité des tâches cycliques, celle-ci peut être testée sur la tâche vitesse, dès qu'une tâche concurrente est arrivée. On vérifie visuellement que le reste de la course se déroule avec les mêmes conditions de vitesse.

Dans l'exemple précédemment décrit, le procédé selon l'invention s'appliquait à une configuration monoprocesseur. Il importe de noter à ce sujet que ce procédé s'applique également au test des exécutifs multiprocesseurs puisque toutes les relations inter-tâche se font par l'entremise de l'exécutif et qu'aucune tâche n'a la visibilité directe d'un objet manipulé par une autre tâche. Il est donc tout à fait possible de répartir les tâches dans des mémoires séparées dès l'instant que l'exécutif offre des primitives de communication de données. La répartition des tâches sur les différents processeurs n'est qu'une question d'imagination.

Ainsi, dans une configuration biprocesseur, le premier processeur pourra être affecté à la tâche conductrice, à la tâche cyclique et aux tâches concurrentes. Le deuxième processeur pourra être affecté aux deux tâches serveur (externe et interne).

Dans une configuration quadriprocesseur, le premier processeur pourra être affecté, par exemple, à la tâche conductrice et à la tâche cyclique, le deuxième processeur aux tâches concurrentes, le troisième processeur à la tâche serveur interne et le quatrième processeur à la tâche serveur externe.

Bien que le non-déterminisme soit la caractéristique primordiale du procédé selon l'invention, il est néanmoins possible de le rendre déterministe par exemple dans un but de répétitivité.

Une première solution consiste à supprimer tout ce qui a rapport au temps, comme les attentes sur délais et les tâches cycliques.

Une autre solution plus intéressante, quand on peut maîtriser l'écoulement du temps au niveau de l'exécutif, est de simuler des tops horloge et de faire en sorte que lorsque la tâche conductrice reprend la main, (toutes les tâches concurrentes étant bloquées sur une condition d'attente quelconque) elle puisse provoquer l'équivalent d'un top horloge et faire en sorte que le temps s'écoule, mais d'une façon synchrone aux tâches.

Bien entendu, toute version déterministe offre une couverture de tests beaucoup moins importante que la version non-déterministe.

L'exemple de mise en oeuvre du procédé selon l'invention, qui est décrit ci-après, est destiné à assurer la validation des boîtes aux lettres et de l'exécutif temps réel (de type préemptif) des calculateurs commercialisés sous la dénomination SERIE 7000 par la Demanderesse et dont on souhaite tester les primitives suivantes :

TASK (tâche) lance la tâche spécifiée immédiatement.

TASK_EVENT (tâche, événement) lance la tâche spécifiée en attente de l'événement spécifié. Si l'événement est déjà arrivé, cette primitive est équivalente à un TASK.

TASK_DELAY (tâche, délai) lance la tâche spécifiée en attente du délai spécifié. Si le délai est déjà épuisé, cette primitive est équivalente à un TASK.

CYCLE (tâche, période) lance la tâche spécifiée immédiatement. La tâche sera automatiquement relancée à la période spécifiée.

END_CYCLE (tâche) arrête la périodicité de la tâche spécifiée sans arrêter la tâche.

END_TASK arrête l'exécution de la tâche en cours. La tâche devra être relancée par une primitive de lancement.

SET_EVENT (événement) passe l'événement spécifié dans l'état arrivé. Toutes les tâches en attente de cet événement sont libérées.

RESET_EVENT (événement) passe l'événement spécifié dans l'état non-arrivé.

TEST_EVENT (événement, compte rendu) fournit l'état de l'événement spécifié dans le compte rendu.

PULSE_EVENT (événement) passe l'événement spécifié dans l'état arrivé puis dans l'état non-arrivé de façon indivisible. Toutes les tâches en attente de cet événement sont libérées.

WAIT_EVENT (événement) bloque la tâche en attente de l'événement spécifié s'il n'est pas déjà arrivé sinon ne fait rien.

RESERVE (ressource) demande l'accès à la ressource spécifiée. Si la ressource est libre, la tâche continue son exécution en occupant la ressource. Si la ressource est occupée, la tâche est bloquée en attente de libération de la ressource.

TEST_AND_RESERVE (ressource, compte rendu) teste et demande l'accès à la ressource spécifiée. Le compte rendu indique l'état de la ressource. Si la ressource est libre, la tâche continue son exécution en occupant la ressource. Si la ressource est occupée, la tâche continue son exécution sans occuper la ressource.

FREE (ressource) libère l'accès à la ressource spécifiée. Si plusieurs tâches sont en attente de cette ressource, elle est attribuée à la tâche la plus prioritaire qui reprend son exécution.

WAIT_DELAY (délai) bloque la tâche en attente du délai spécifié s'il n'est pas déjà épuisé sinon ne fait rien.

TIMER décrémente les compteurs de délai et de période gérés par l'exécutif. Cette primitive est normalement placée dans la procédure d'interruption Horloge Temps Réel. Elle prévient l'exécutif de l'écoulement du temps.

SCHEDULE permet d'ordonnancer les tâches lorsque la primitive TIMER est utilisée en dehors d'une procédure d'interruption.

SEND (boîte aux lettres, message) envoie le message spécifié dans la boîte aux lettres spécifiée. Si la boîte n'est pas pleine, le message est déposé et la tâche continue son exécution. Si la boîte est pleine, la tâche est bloquée en attente de pouvoir déposer son message.

TEST_AND_SEND (boîte aux lettres, message, compte rendu) tente d'envoyer le message spécifié dans la boîte aux lettres spécifiée. Le compte rendu indique l'état de la boîte (pleine ou non). Si la boîte n'est pas pleine, le message est déposé et la tâche continue son exécution. Si la boîte est pleine, la tâche continue son exécution sans avoir déposé son message.

RECEIVE (boîte aux lettres, message) reçoit le message spécifié de la boîte aux lettres spécifiée. Si la boîte n'est pas vide, le plus ancien message est extrait et la tâche continue son exécution. Si la boîte est vide, la tâche est bloquée en attente de pouvoir recevoir un message.

TEST_AND_RECEIVE (boîte aux lettres, message, compte rendu) tente de recevoir le message spécifié de la boîte aux lettres spécifiée. Le compte rendu indique l'état de la boîte (vide ou non). Si la boîte n'est pas vide, le plus ancien message est extrait et la tâche continue son exécution. Si la boîte est vide, la tâche continue son exécution sans avoir reçu de message.

Dans cet exécutif :
- La priorité des tâches est comprise entre 0 (la plus haute) et 63 (la plus basse) et toutes les tâches ont une priorité différenciée. Les tâches sont identifiées par un numéro qui correspond à leur priorité.
- Les événements, les ressources et les boîtes aux lettres sont également identifiées par un numéro.
- Les événements sont initialement dans l'état non-arrivé, les ressources dans l'état libre et les boîtes aux lettres dans l'état vide.

Les tâches concurrentes, au nombre de 10, sont réparties en deux groupes dans lesquels elles sont respectivement désignées par les termes CONCUR (A à J) et CONCUR (K à T).

Le procédé selon l'invention, qui est exécuté par un programme, commence par un appel à la procédure d'interruption de montée d'alimentation. Dès que l'Horloge Temps Réel est initialisée, la procédure d'interruption Horloge Temps Réel est automatiquement appelée par le matériel à la cadence choisie.

Le programme possède les objets globaux suivants :
- boîte aux lettres DISPLAY_BOX
- boîte aux lettres RANDOM_BOX
- boîte aux lettres RANK_BOX
- boîte aux lettres AT_END_BOX

- événement commun SPEED_EV
- événement commun DRIVER_EV
- événement privé CONCUR_A_EV
- événement privé CONCUR_B_EV
- événement privé CONCUR_C_EV
- ...
- événement privé CONCUR_T_EV

- ressource GATE1_RES
- ressource GATE2_RES
- ressource GATE3_RES
- ressource GATE4_RES

Procédure d'interruption de montée d'alimentation
Initialisation de l'Horloge Temps Réel à la cadence d'1 ms (version non-déterministe uniquement)
Initialisation du Temps Absolu à 0
appel primitive TASK (DRIVER_TASK) pour lancer la tâche conductrice
Fin d'interruption

Procédure d'interruption Horloge Temps Réel (version non-déterministe)
Incrémenter le Temps Absolu
appel primitive TIMER
Fin d'interruption

Tâche DRIVER_TASK priorité 23
Initialiser le nombre de courses à 0
Création des objets Temps Réels boîtes aux lettres
appel primitive TASK (RANDOM_TASK) pour lancer le serveur de nombres aléatoires
appel primitive TASK (DISPLAY_TASK) pour lancer le serveur d'écran
Répéter
appel NEW_RACE
Indéfiniment
Fin DRIVER_TASK

Procédure NEW_RACE
Effacer l'écran
appel DISPLAY_TRACK
appel DISPLAY_RACE
appel quatre fois primitive SEND (RANK_BOX) pour classer les quatre premières tâches concurrentes
Pour toutes les tâches concurrentes prises dans un ordre a priori
appel START_CONCUR (paramètres de la tâche concurrente)
Fin Pour
appel primitive CYCLE (SPEED_TASK) pour lancer cycliquement la tâche cyclique avec une période comprise aléatoirement entre 100 ms et 1 s
Répéter
appel TICK (version déterministe uniquement)
Tirer un nombre entre 1 et 21
Cas 1 : appel primitive PULSE_EVENT (CONCUR_A_EV) événement privé
Cas 2 : appel primitive PULSE_EVENT (CONCUR_B_EV) événement privé
Cas 3 : appel primitive PULSE_EVENT (CONCUR_C_EV) événement privé
...
Cas 19 : appel primitive PULSE_EVENT (CONCUR_S_EV) événement privé
Cas 20 : appel primitive PULSE_EVENT (CONCUR_T_EV) événement privé
Cas 21 : appel primitive PULSE_EVENT (DRIVER_EV) événement commun
Fin des Cas
appel TEST_AT_END
Si une première tâche concurrente est arrivée
appel primitive END_CYCLE (SPEED_TASK) pour arrêter la cyclicité de la tâche cyclique
Fin Si
Jusqu'à ce que toutes les tâches concurrentes soient arrivées
Mélanger l'ordre de départ des tâches concurrentes pour la prochaine course
Fin NEW_RACE

Procédure START_CONCUR (CONCUR_TASK)
Tirer un nombre entre 1 et 3
Cas 1 : appel primitive TASK (CONCUR_TASK) pour lancement immédiat de la tâche concurrente
Cas 2 : appel primitive TASK_EVENT (CONCUR_TASK) pour lancement différé de la tâche concurrente en attente de son événement privé
Cas 3 : appel primitive TASK_EVENT (CONCUR_TASK) pour lancement différé de la tâche concurrente en attente d'un délai compris aléatoirement entre 0 et 100 ms
Fin des Cas
Fin START-CONCUR

Procédure TEST_AT_END
Répéter
appel primitive TEST_AND_RECEIVE (AT_END_BOX) pour tenter de recevoir un message
Si message reçu alors inscrire la tâche concurrente arrivée au registre
Jusqu'à l'épuisement des messages en attente
Fin TEST_AT_END

Procédure DISPLAY_TRACK
Préparer un message pour afficher la piste :
Pour tous les caractères qui constituent la piste
appel primitive SEND (DISPLAY_BOX) pour envoyer ce caractère
Fin Pour
Fin DISPLAY_TRACK

Procédure DISPLAY_RACE
Incrémenter le nombre de courses entre les tâches concurrentes
Préparer un message pour afficher le numéro de course :
- le texte "Phase no" en ligne 24, colonne 1 appel primitive SEND (DISPLAY_BOX) pour envoyer ce texte
- le numéro de course en ligne 24, colonne 10 appel primitive SEND (DISPLAY_BOX) pour envoyer ce nombre

Préparer un message pour afficher le temps total des courses :
- le texte "Temps total" en ligne 24, colonne 30 appel primitive SEND (DISPLAY_BOX) pour envoyer ce texte
- le temps total en ms en ligne 24, colonne 42 appel primitive SEND (DISPLAY_BOX) pour envoyer ce nombre

Préparer un message pour afficher le temps moyen d'une course :
- le texte "Temps moyen" en ligne 24, colonne 50 appel primitive SEND (DISPLAY_BOX) pour envoyer ce texte
- le temps moyen en ms en ligne 24, colonne 62 appel primitive SEND (DISPLAY_BOX) pour envoyer ce nombre

Fin DISPLAY_RACE

Procédure TICK (appelée uniquement dans la version déterministe)
Incrémenter le Temps Absolu
appel primitive TIMER
appel primitive SCHEDULE
Fin TICK

Fonction RANDOM
appel primitive RECEIVE (RANDOM_BOX) pour recevoir un message
Renvoyer le nombre aléatoire flottant appartenant à l'intervalle (0.0 compris et 1.0 non compris) contenu dans le message
Fin RANDOM

Tâche CONCURRENTE_A_TASK priorité 1
La tâche concurrente A va courir sur la ligne No 1 à partir de la colonne 1
appel MOVE_CONCUR (paramètres de la tâche concurrente A)
Fin CONCUR_A_TASK

Tâche CONCURRENTE_B_TASK priorité 3
La tâche concurrente B va courir sur la ligne No 2 à partir de la colonne 1
appel MOVE_CONCUR (paramètres de la tâche concurrente B)
Fin tâche CONCURRENTE_B_TASK

Tâche CONCURRENTE_C_TASK priorité 5
La tâche concurrente C va courir sur la ligne No 3 à partir de la colonne 1
appel MOVE_CONCUR (paramètres de la tâche concurrente C)
Fin tâche CONCURRENTE_C_TASK

Tâche CONCURRENTE_D_TASK priorité 7
La tâche concurrente D va courir sur la ligne No 4 à partir de la colonne 1
appel MOVE_CONCUR (paramètres de la tâche concurrente D)
Fin tâche CONCURRENTE_D_TASK

Tâche CONCURRENTE_E_TASK priorité 9
La tâche concurrente E va courir sur la ligne No 5 à partir de la colonne 1
appel MOVE_CONCUR (paramètres de la tâche concurrente E)
Fin tâche CONCURRENTE_E_TASK

Tâche CONCURRENTE_F_TASK priorité 12
La tâche concurrente F va courir sur la ligne No 6 à partir de la colonne 1
appel MOVE_CONCUR (paramètres de la tâche concurrente F)
Fin tâche CONCURRENTE_F_TASK

Tâche CONCURRENTE_G_TASK priorité 14
La tâche concurrente G va courir sur la ligne No 7 à partir de la colonne 1
appel MOVE_CONCUR (paramètres de la tâche concurrente G)
Fin tâche CONCURRENTE_G_TASK

Tâche CONCURRENTE_H_TASK priorité 16
La tâche concurrente H va courir sur la ligne No 8 à partir de la colonne 1
appel MOVE_CONCUR (paramètres de la tâche concurrente H)
Fin tâche CONCURRENTE_H_TASK

Tâche CONCURRENTE_I_TASK priorité 18
La tâche concurrente I va courir sur la ligne No 9 à partir de la colonne 1
appel MOVE_CONCUR (paramètres de la tâche concurrente I)
Fin tâche CONCURRENTE_I_TASK

Tâche CONCURRENTE_J_TASK priorité 20
La tâche concurrente J va courir sur la ligne No 10 à partir de la colonne 1
appel MOVE_CONCUR (paramètres de la tâche concurrente J)
Fin tâche CONCURRENTE_J_TASK

Tâche CONCURRENTE_K_TASK priorité 2
La tâche concurrente K va courir sur la ligne No 12 à partir de la colonne 1
appel MOVE_CONCUR (paramètres de la tâche concurrente K)
Fin tâche CONCURRENTE_K_TASK

Tâche CONCURRENTE_L_TASK priorité 4
La tâche concurrente L va courir sur la ligne No 13 à partir de la colonne 1
appel MOVE_CONCUR (paramètres de la tâche concurrente L)
Fin tâche CONCURRENTE_L_TASK

Tâche CONCURRENTE_M_TASK priorité 6
La tâche concurrente M va courir sur la ligne No 14 à partir de la colonne 1
appel MOVE_CONCUR (paramètres de la tâche concurrente M)
Fin tâche CONCURRENTE_M_TASK

Tâche CONCURRENTE_N_TASK priorité 8
La tâche concurrente N va courir sur la ligne No 15 à partir de la colonne 1
appel MOVE_CONCUR (paramètres de la tâche concurrente N)
Fin tâche CONCURRENTE_N_TASK

Tâche CONCURRENTE_O_TASK priorité 10
La tâche concurrente 0 va courir sur la ligne No 16 à partir de la colonne 1
appel MOVE_CONCUR (paramètres de la tâche concurrente O)
Fin tâche CONCURRENTE_O_TASK

Tâche CONCURRENTE_P_TASK priorité 13
La tâche concurrente P va courir sur la ligne No 17 à partir de la colonne 1
appel MOVE_CONCUR (paramètres de la tâche concurrente P)
Fin tâche CONCURRENTE_P_TASK

Tâche CONCURRENTE_Q_TASK priorité 15
La tâche concurrente Q va courir sur la ligne No 18 à partir de la colonne 1
appel MOVE_CONCUR (paramètres de la tâche concurrente Q)
Fin tâche CONCURRENTE_Q_TASK

Tâche CONCURRENTE_R_TASK priorité 17
La tâche concurrente R va courir sur la ligne No 19 à partir de la colonne 1
appel MOVE_CONCUR (paramètres de la tâche concurrente R)
Fin tâche CONCURRENTE_R_TASK

Tâche CONCURRENTE_S_TASK priorité 19
La tâche concurrente S va courir sur la ligne No 20 à partir de la colonne 1
appel MOVE_CONCUR (paramètres de la tâche concurrente S)
Fin tâche CONCURRENTE_S_TASK

Tâche CONCURRENTE_T_TASK priorité 21
La tâche concurrente T va courir sur la ligne No 21 à partir de la colonne 1
appel MOVE_CONCUR (paramètres de la tâche concurrente T)
Fin tâche CONCURRENTE_T_TASK

Procédure MOVE_CONCUR (paramètres d'une tâche concurrente)
Afficher la désignation de la tâche concurrente en question sur sa ligne en première colonne
Répéter
Tirer un nombre aléatoire entre 1 et 6
Cas 1 : appel primitive TEST_EVENT (SPEED-EV) pour savoir dans quelle condition de vitesse on se trouve
Si rapide alors appel STEP (rapide et pas de bonus)
Si lent alors appel STEP (lent et pas de bonus)
Cas 2 : appel primitive TEST_EVENT (SPEED_EV) pour savoir dans quelle condition de vitesse on est
Si rapide alors appel STEP (rapide et pas de bonus)
Si lent alors on ne fait rien
Cas 3 : appel primitive TEST_EVENT (SPEED_EV) pour savoir dans quelle condition on est
Si rapide alors appel STEP (rapide et bonus)
Si lent alors on ne fait rien
Cas 4 : appel primitive WAIT_EVENT (CONCUR_EV) pour attendre son événement privé
Cas 5 : appel primitive WAIT_EVENT (DRIVER_EV) pour attendre l'événement commun
Cas 6 : appel primitive WAIT_DELAY pour attendre un délai tiré aléatoirement entre 0 et 100 ms
Fin des Cas
Jusqu'à ce que la tâche concurrente soit en colonne 77
appel DISPLAY_RANK pour afficher son classement
appel AT_END pour s'inscrire à l'arrivée
appel primitive END_TASK pour terminer la tâche concurrente en cours
Fin MOVE_CONCUR

Procédure STEP (vitesse et bonus)
Si la tâche concurrente est face à un obstacle ("[") alors
Si il bénéficie d'un bonus alors
appel primitive TEST_AND_RESERVE (GATE_RES) pour tenter de réserver la ressource obstacle
Si la ressource était occupée (elle n'est pas réservée) alors
sauter complètement l'obstacle
Fin Si
Sinon
appel primitive RESERVE (GATE_RES) pour réserver la ressource obstacle
Fin Si
Sinon Si la tâche concurrente est sur la fin de l'obstacle ("]") alors
appel primitive FREE (GATE_RES) pour libérer la ressource obstacle
Fin Si
Avancer la tâche concurrente d'une colonne
Si la vitesse est rapide alors
Afficher la lettre identifiant la tâche concurrente en majuscules sur sa ligne et sa colonne
Sinon
Afficher la lettre identifiant la tâche concurrente en minuscules sur sa ligne et sa colonne
Fin Si
Fin STEP

Procédure DISPLAY_RANK
appel primitive TEST_AND_RECEIVE (RANK_BOX) pour tenter de recevoir un message contenant un classement
Si un message a été reçu alors
Afficher le classement en colonne 79 de la ligne de la tâche concurrente
Fin Si
Fin DISPLAY_RANK

Procédure AT_END
Préparer le message donnant l'identification de la tâche concurrente
appel primitive SEND (AT_END_BOX) pour envoyer le message
Fin AT_END

Tâche DISPLAY_TASK priorité 22
Initialiser le périphérique écran (vitesse, parité, etc)
Effacer l'écran
Répéter
appel primitive RECEIVE (DISPLAY_BOX) en vue d'exploiter le message reçu
Envoyer le curseur de l'écran sur la ligne et la colonne spécifiées
Ecrire à l'écran selon le type de valeur spécifié :
Cas caractère : Afficher le caractère
Cas chaîne de caractères : Afficher chaîne de caractères
Cas nombre entier : Afficher le nombre entier
etc
Fin des Cas
Indéfiniment
Fin DISPLAY_TASK

Tâche SPEED_TASK priorité 0
appel primitive TEST_EVENT (SPEED_EV) pour tester l'état de l'événement
Si l'événement est arrivé ce qui correspond au régime lent, alors
appel primitive RESET_EVENT (SPEED_EV) pour le mettre à non-arrivé
appel DISPLAY_SPEED (rapide)
Sinon c'est qu'on est en régime rapide
appel primitive SET-EVENT (SPEED_EV) pour le mettre à arrivé
appel DISPLAY_SPEED (lent)
Fin Si
Fin SPEED_TASK

Procédure DISPLAY_SPEED (vitesse)
préparer le message à afficher en ligne 24, colonne 20
Si la vitesse est lente alors
le message est "lent" en minuscules
Sinon
le message est "RAPIDE" en majuscules
Fin Si
appel primitive TEST_AND_SEND (DISPLAY_BOX) pour envoyer le message
Fin DISPLAY_SPEED

Tâche RANDOM_TASK priorité 11
Initialiser le générateur de nombres pseudo-aléatoires
Répéter
Calculer un nombre aléatoire et le ranger dans le message
appel primitive SEND (RANDOM_BOX) pour envoyer le message
Indéfiniment
Fin RANDOM_TASK

La progression des tâches concurrentes peut être visualisée à l'écran selon le mode de représentation illustré par les figures 1 à 4 sur lesquelles :
- le parcours commun des tâches concurrentes est représenté par une ligne horizontale en traits interrompus (chaque segment indiquant une progression de un pas) et les obstacles sont indiqués par des espaces entre crochets pouvant comprendre un ou plusieurs pas, selon leur importance ;
- chaque tâche concurrente est représentée par une lettre (en majuscule dans la première condition de la tâche cyclique et en minuscule dans la seconde condition de la tâche cyclique) qui se déplace parallèlement en parcours commun, la progression de cette tâche étant indiquée sous la forme d'un histogramme ;
- les tâches concurrentes sont réparties en deux groupes (de A jusqu'à J et de K à T) respectivement disposés en-dessus et en-dessous du parcours commun ;
- des indications utiles telles que, par exemple, le numéro de la phase opératoire, la condition imposée par la tâche cyclique, le temps total de la phase opératoire, et le temps moyen des phases opératoires précédemment exécutées (fenêtres 11, 12, 13, 14) ;
- les numéros 1, 2, 3 situés dans la marge droite 15 (figures 3 et 4) désignent les trois premières tâches concurrentes dans l'ordre de leur arrivée. En final, seules les quatre premières tâches concurrentes sont signalées dans cette fenêtre, ce paramètre étant réglable.

Dans l'instant qui précède le départ d'une phase opératoire, seul le parcours est représenté à l'écran (figure 1). Au moment du départ, les tâches concurrentes apparaissent sur une ligne verticale de départ de la façon indiquée sur la figure 2 où seules les tâches D et S ont entamé leur progression. La figure 3 montre les positions respectives des tâches en milieu de la phase opératoire, les tâches N, D, O étant arrivées dans l'ordre, en fin de parcours.

A la fin de la phase opératoire, toutes les tâches concurrentes sont arrivées en fin de parcours (figure 4).

Bien entendu, l'invention ne se limite pas à ce mode de représentation.

## Revendications

1. Procédé pour le test des primitives d'un exécutif temps réel permettant d'exécuter plusieurs tâches en parallèle sur un processeur conçu pour n'exécuter qu'une seule tâche à la fois, chaque tâche utilisant l'ensemble des ressources de la machine nécessaires à son exécution, et ce, grâce à un ensemble de primitives de synchronisation et de partage des ressources qui permettent aux différentes tâches de s'exécuter, de façon asynchrone,
caractérisé en ce qu'il consiste à mettre en oeuvre une pluralité de tâches coopérantes, à savoir :
- un ensemble de tâches concurrentes, bâties sur un même modèle et qui ne diffèrent les unes des autres que par leur contexte statique à savoir leur désignation et leur priorité, chacune de ces tâches concurrentes pouvant effectuer une suite d'actions de deux types, déterminées aléatoirement, à savoir : des actions engendrant une progression dans le déroulement de la tâche et des actions consistant en des attentes ;
- une tâche conductrice qui organise la mise en oeuvre des tâches concurrentes et qui règle plus particulièrement le lancement des tâches concurrentes, qui active leur déroulement et qui détecte leur achèvement ; et
- une tâche serveur de ressource interne, telle qu'un distributeur de nombres aléatoires ;
ladite mise en oeuvre comportant :
- la détermination des priorités respectives des tâches, de manière à répartir leur activité dans le temps et à créer un maximum de cas différents de préemption,
- une phase préalable comportant :
. une initialisation de l'horloge temps réel,
. le lancement de la tâche conductrice,
. la création de l'ensemble des objets temps réel nécessaires,
. le lancement des tâches serveur,
- une succession de phases opératoires, au cours de chacune desquelles la tâche conductrice fait concourir les tâches concurrentes selon un même parcours, cette succession de phases comportant :
. le choix aléatoire d'un mode de lancement des tâches concurrentes, parmi différents modes de lancements préétablis,
. le lancement des tâches concurrentes selon le mode de lancement choisi, au moyen de primitives choisies aléatoirement, dans un ordre choisi au hasard, chacune des tâches, une fois lancée, tirant au hasard les susdites actions,
. la libération des tâches concurrentes, de leur condition d'attente, soit par un épuisement des délais qui les bloquent, soit par un tirage aléatoire de numéros d'événements publics ou privés qui libèrent les tâches concurrentes en attente de ces événements,
. la détection de l'arrivée de chacune des tâches concurrentes en fin de parcours,
. la prise en compte et la mémorisation de paramètres caractéristiques de la phase opératoire qui vient de se dérouler,
. la modification de l'ordre dans lequel les tâches opératoires vont être relancées au cours de la phase opératoire suivante,
. le lancement de la phase opératoire suivante,
. l'analyse des susdits paramètres pendant le déroulement des susdites phases opératoires et/ou à l'achèvement de celles-ci.

2. Procédé selon la revendication 1, caractérisé en ce que les différents modes de lancements préétablis comprennent :
- le lancement immédiat inconditionnel,
- le lancement différé en attente d'un événement,
- le lancement différé en attente d'un délai, lui-même aléatoire.

3. Procédé selon l'une des revendications 1 et 2,
caractérisé en ce qu'il fait en outre intervenir au moins une tâche serveur de ressource externe, une tâche de serveur de ressource interne, et une tâche cyclique.

4. Procédé selon la revendication 3,
caractérisé en ce que la tâche serveur de ressource externe est une tâche de gestion d'un écran, la tâche serveur de ressource interne est un distributeur des nombres aléatoires utilisés par les tâches dans le procédé, et la tâche cyclique impose, de façon périodique, des conditions qui influent sur le déroulement des tâches concurrentes lors des différentes phases opératoires.

5. Procédé selon l'une des revendications précédentes,
caractérisé en ce que le classement des susdites tâches en fonction de leur priorité, dans un ordre croissant, est le suivant :
- la tâche conductrice qui est la tâche de fond,
- la tâche serveur de ressource externe,
- les tâches concurrentes qui sont réparties sur plusieurs niveaux de priorité croissants,
- la tâche serveur de ressource interne, et
- la tâche cyclique.

6. Procédé selon l'une des revendications précédentes,
caractérisé en ce que la tâche serveur de ressource externe reçoit des demandes émanant des tâches appelantes sous la forme de messages qui décrivent le type d'entrée/sortie qui doit être réalisé pour le compte de la tâche appelante, ces messages étant disposés dans une première boîte aux lettres qui, lorsqu'elle est pleine, provoque un blocage des tâches appelantes qui demeurent dans l'attente de pouvoir déposer leur message et reprendre la main, et en ce que, dans le cas où la première boîte aux lettres est vide, la tâche serveur de ressource externe est bloquée en attente de recevoir un nouveau message.

7. Procédé selon l'une des revendications précédentes,
caractérisé en ce que la tâche serveur de ressources externes traite complètement une demande avant de prendre en compte la demande suivante, et ce, quelle que soit la priorité des tâches appelantes.

8. Procédé selon la revendication 6 ou 7,
caractérisé en ce que la tâche serveur de ressource interne consiste en une tâche distributeur de nombres aléatoires déposant les nombres aléatoires dans une deuxième boîte aux lettres, en ce que les tâches qui désirent obtenir un nombre se mettent en réception sur cette deuxième boîte aux lettres, en ce que si cette deuxième boîte aux lettres est vide, les tâches appelantes sont bloquées en attendant de pouvoir extraire un nombre et poursuivre leur exécution, et en ce que, lorsque la deuxième boîte aux lettres est pleine, la susdite tâche distributeur se bloque, dans l'attente de pouvoir déposer un nouveau nombre.

9. Procédé selon l'une des revendications 3-8,
caractérisé en ce que la susdite tâche cyclique utilise un événement qu'elle bascule à chaque nouveau cycle, cette tâche cyclique utilisant trois primitives, à savoir :
- une première primitive pour connaître l'état dans lequel se trouve cet événement,
- une deuxième primitive pour le mettre à l'état arrivé,
- une troisième primitive pour le mettre à l'état non-arrivé.

10. Procédé selon l'une des revendications précédentes,
caractérisé en ce que le parcours de chacune des tâches concurrentes comprend des obstacles communs gérés en ressource non partageable, chacun de ces obstacles ne pouvant être franchi que par une seule tâche concurrente à la fois, et en ce qu'en arrivant sur un obstacle, chaque tâche concurrente demande l'accès à la ressource correspondante par une première primitive et libère en fin d'obstacle la ressource qu'elle occupait par une deuxième primitive.

11. Procédé selon la revendication 10,
caractérisé en ce qu'une tâche concurrente peut franchir un obstacle occupé sans attendre qu'il se libère, à la suite de l'obtention au hasard d'un bonus, par exemple lorsque la tâche cyclique affiche une condition déterminée.

12. Procédé selon l'une des revendications précédentes,
caractérisé en ce qu'à la fin de son parcours, chaque tâche concurrente inscrit son nom sur un registre qui est consulté en permanence par la tâche conductrice pour détecter la fin d'une phase opératoire, en vue d'en relancer une nouvelle.

13. Procédé selon l'une des revendications précédentes,
caractérisé en ce que les tâches concurrentes de tête sont classées selon leur ordre d'arrivée par la tâche conductrice alors que les tâches concurrentes de queue ne sont pas départagées.

## Patentansprüche

1. Verfahren für den Test der Routinen eines Echtzeit-Steuerprogramms, das es erlaubt, mehrere Tasks parallel auf einem Prozessor durchzuführen, der konstruktionsbedingt nur eine Task auf einmal durchführen kann, wobei jede Task den Satz der zu ihrer Durchführung notwendigen Ressourcen der Maschine verwendet, und dies aufgrund einer Einheit von Routinen zur Synchronisation und zur Teilung der Ressourcen, die es den verschiedenen Tasks ermöglichen, asynchron durchgeführt zu werden,
dadurch gekennzeichnet, daß es darin besteht, eine Vielzahl von kooperierenden Tasks zu verwenden, nämlich:
- eine Einheit von konkurrierenden Tasks, die nach dem gleichen Modell gebaut sind und sich voneinander nur durch ihren statischen Kontext (d.h. ihr Benennung und ihre Priorität) unterscheiden, wobei jede dieser konkurrierenden Tasks eine Folge von zwei Arten von Aktionen durchführen kann, die beliebig bestimmt werden: Aktionen, die einen Fortgang im Ablauf der Task erzeugen und Aktionen, die aus Wartezeiten bestehen;
- eine Main-Task, die die Anwendung der konkurrierenden Tasks organisiert und die insbesondere die Freigabe der konkurrierenden Tasks regelt, die ihren Ablauf aktiviert und die ihre Beendigung registriert; und
- eine Server-Task als innere Ressource, z.B. ein Verteiler von Zufallszahlen;
wobei die Anwendung enthält:
- die Bestimmung der jeweiligen Prioritäten der Tasks, um ihre Aktivität zeitlich zu verteilen und ein Maximum von verschiedenen Fällen von Preemption zu erzeugen,
- eine vorhergehende Phase, die aufweist:
. eine Initialisierung des Echtzeit-Taktgebers,
. die Freigabe der Main-Task,
. die Erzeugung der Einheit der notwendigen Echtzeitobjekte,
. die Freigabe der Server-Tasks,
- eine Folge von operativen Phasen, in jeder von welchen die Main-Task die konkurrierenden Tasks gemäß einer gemeinsamen Strecke konkurrieren läßt, wobei diese Folge von Phasen enthält:
. die zufällige Auswahl eines Freigabemodus der konkurrierenden Tasks aus verschiedenen vorher festgelegten Freigabemodi,
. die Freigabe der konkurrierenden Tasks gemäß dem gewählten Freigabemodus mittels zufällig ausgewählter Routinen in einer zufällig ausgewählten Reihenfolge, wobei jede der Tasks, sobald sie freigegeben ist, die erwähnten Aktionen zufällig auswählt,
. die Freisetzung der konkurrierenden Tasks von ihrem Wartezustand, entweder durch Erschöpfung der Fristen, die sie blockieren, oder durch eine zufällige Auswahl von Zahlen öffentlicher oder privater Ereignisse, die die wartenden konkurrierenden Tasks dieser Ereignisse freigeben,
. die Erfassung der Ankunft jeder der konkurrierenden Task am Ende des Strecke,
. die Berücksichtigung und die Speicherung der charakteristischen Parameter der operativen Phase, die soeben abgelaufen ist,
. die Veränderung der Reihenfolge, in der die operativen Tasks während der folgenden operativen Phase wieder freigegeben werden,
. die Freigabe der folgenden operativen Phase,
. die Analyse der erwähnten Parameter während des Ablaufs der operativen Phasen und/oder bei Beendigung dieser Phasen.

2. Verfahren nach Anspruch 1, dadurch gekennzeichnet, daß die verschiedenen vorher festgesetzten Freigabemodi enthalten:
- die sofortige unbedingte Freigabe,
- die verschobene Freigabe in Erwartung eines Ereignisses,
- die verschobene Freigabe in Erwartung einer Frist, die selbst zufällig ist.

3. Verfahren nach einem der Ansprüche 1 und 2, dadurch gekennzeichnet, daß es weiter mindestens eine Server-Task als äußere Ressource, eine Server-Task als innere Ressource und eine zyklische Task verwendet.

4. Verfahren nach Anspruch 3, dadurch gekennzeichnet, daß die Server-Task als äußere Ressource eine Task der Verwaltung eines Bildschirms ist, daß die Server-Task als innere Ressource ein Verteiler der Zufallszahlen ist, die von den Tasks im Verfahren verwendet werden, und daß die zyklische Task periodisch Bedingungen vorschreibt, die den Ablauf der konkurrierenden Tasks während der verschiedenen operativen Phasen beeinflussen.

5. Verfahren nach einem der vorhergehenden Ansprüche, dadurch gekennzeichnet, daß die Klassifizierung der Tasks in Abhängigkeit von ihrer Priorität in einer ansteigenden Reihenfolge die folgende ist:
- die Main-Task, die die unterste Task ist,
- die Server-Task als äußere Ressource,
- die konkurrierenden Tasks, die auf mehrere ansteigende Prioritäts-Niveaus verteilt sind,
- die Server-Task als innere Ressource, und
- die zyklische Task.

6. Verfahren nach einem der vorhergehenden Ansprüche, dadurch gekennzeichnet, daß die Server-Task als äußere Ressource Anfragen empfängt, die von den rufenden Tasks in Form von Nachrichten herrühren, die die Art der Freigabe/Beendigung beschreiben, die für die rufende Task ausgeführt werden muß, wobei diese Nachrichten sich in einem ersten Briefkasten befinden, der, wenn er voll ist, eine Blockierung der rufenden Tasks bewirkt, die in Bereitschaft bleiben, um ihre Nachricht abgeben zu können und weiterarbeiten zu können, und daß, wenn der erste Briefkasten leer ist, die Server-Task als äußere Ressource blockiert wird in Erwartung einer neuen Nachricht.

7. Verfahren nach einem der vorhergehenden Ansprüche, dadurch gekennzeichnet, daß die Server-Task als äußere Ressource eine Anfrage vollständig verarbeitet, ehe sie die folgende Anfrage berücksichtigt, und dies unabhängig von der Priorität der rufenden Tasks.

8. Verfahren nach Anspruch 6 oder 7, dadurch gekennzeichnet, daß die Server-Task als innere Ressource aus einer Zufallszahlen verteilenden Task besteht, die die Zufallszahlen in einem zweiten Briefkasten anordnet, daß die Tasks, die eine Zahl erhalten wollen, sich in Empfangsbereitschaft auf diesen zweiten Briefkasten versetzen, daß, wenn dieser zweite Briefkasten leer ist, die rufenden Tasks blockiert sind in Bereitschaft, eine Zahl zu entnehmen und ihre Durchführung fortsetzen zu können, und daß, wenn der zweite Briefkasten voll ist, die verteilende Task sich blockiert, in Erwartung, eine neue Zahl abgeben zu können.

9. Verfahren nach einem der Ansprüche 3 bis 8, dadurch gekennzeichnet, daß die zyklische Task ein Ereignis verwendet, das sie bei jedem neuen Zyklus umschaltet, wobei diese zyklische Task drei Routinen verwendet, d.h.:
- eine erste Routine, um den Zustand zu erfahren, in dem sich dieses Ereignis befindet,
- eine zweite Routine, um es in den Zustand "angekommen" zu bringen,
- eine dritte Routine, um es in den Zustand "nicht angekommen" zu bringen.

10. Verfahren nach einem der vorhergehenden Ansprüche, dadurch gekennzeichnet, daß die Strecke jeder der konkurrierenden Tasks gemeinsame Hindernisse aufweist, die als nicht teilbare Ressource verwaltet werden, wobei jedes dieser Hindernisse nur von einer konkurrierenden Task auf einmal überwunden werden kann, und daß bei Ankunft an einem Hindernis jede konkurrierende Task den Zugang zur entsprechenden Ressource über eine erste Routine anfordert und am Ende des Hindernisses die Ressource, die sie besetzte, über eine zweite Routine freigibt.

11. Verfahren nach Anspruch 10, dadurch gekennzeichnet, daß eine konkurrierende Task ein besetztes Hindernis überwinden kann, ohne sein Freiwerden abzuwarten, nach dem zufälligen Erhalt eines Bonus, zum Beispiel, wenn die zyklische Task eine bestimmte Bedingung anzeigt.

12. Verfahren nach einem der vorhergehenden Ansprüche, dadurch gekennzeichnet, daß am Ende ihrer Strecke jede konkurrierende Task ihren Namen in ein Register einschreibt, das permanent von der Main-Task abgefragt wird, um das Ende einer operativen Phase zu erfassen, mit dem Ziel, eine neue freizugeben.

13. Verfahren nach einem der vorhergehenden Ansprüche, dadurch gekennzeichnet, daß die ersten konkurrierenden Tasks gemäß der Reihenfolge ihrer Ankunft von der Main-Task klassifiziert werden, während für die letzten konkurrierenden Tasks keine Rangliste aufgestellt wird.

## Claims

1. A method for testing the primitives of a real-time executive enabling several tasks to be executed in parallel on a processor designed to execute just one task at a time, each task using all the ressources of the machine required for its execution, and this by means of a set of synchronization and resource-sharing primitives which enable the different tasks to be executed asynchronously,
characterized in that it consists in running plural cooperating tasks, i.e. :
- a set of concurrent tasks, based on a same model and only differing from one another by way of their static context, i.e. their designation and their priority, each of these concurrent tasks being capable of performing a randomly determined sequence of actions of two types, i.e. actions generating a progression in the operating of said task and actions consisting in standbys ;
- a driver task which organizes the running of said concurrent tasks and which more particularly regulates the launching of said concurrent tasks, activates the operating sequence and detects completion thereof ; and
- an internal resource server task, such as a random number distributor ;
said running comprising :
- determination of the respective priorities of said tasks, so as to spread their activity over time and create a maximum nmumber of different preemption cases,
- a prior phase comprising :
. an initializing of the real-time clock,
. launching of said driver task,
. creation of the necessary set of real-time objects,
. launching of the server tasks,
- a succession of operation phases during each of which said driver task runs said concurrent tasks through a same operating sequence, said succession of phases comprising :
. random selection of a launching mode of said concurrent tasks, from among different predetermined launching modes,
. launching of said concurrent tasks according to said selected launching mode, by means of randomly selected primitives, in a randomly determined order, each of said tasks randomly selecting the aforesaid actions once they have been launched,
. freeing of the concurrent tasks from their standby status, either by expiry of the delays blocking them, or by random selection of public or private event numbers which free said concurrent tasks awaiting these events,
. detection of the arrival of each of said concurrent tasks at the end of said operating sequence,
. taking into account and memorization of characteristic parameters of the operation phase that has just taken place,
. modification of the order in which the operation tasks will be relaunched during the following operation phase,
. launching of said following operation phase,
. analysis of the above-mentioned parameters during and/or upon completion of the aforesaid operation phases.

2. The method as claimed in claim 1,
characterized in that said different predetermined launching modes comprise :
- immediate unconditional launching,
- launching deferred on standby for an event,
- launching deferred on standby for a delay which is itself random.

3. The method as claimed in one of claims 1 and 2,
characterized in that it further uses at least one external resource server task, an internal resource server task, and a cyclical task.

4. The method as claimed in claim 3,
characterized in that said external resource server task is a screen management task, said internal resource server task is a distributor of random numbers used by the tasks in the method, and said cyclical task periodically imposes conditions that influence said operating sequence of said concurrent tasks during said different operation phases.

5. The method as claimed in one of the preceding claims,
characterized in that the ranking of the above-mentioned tasks, according to their priority and in ascending order, is as follows :
- the driver task which is the background task,
- the external resource server task,
- the concurrent tasks which are divided into several levels of ascending priority,
- the internal resource server task, and
- the cyclical task.

6. The method as claimed in one of the preceding claims,
characterized in that said external resource server task receives requests from the caller tasks in the form of messages describing the type of input/output required for the caller task, said messages being disposed in a first mailbox which, when full, causes a blocking of said caller tasks which remain on standby to be able to deposit their message and continue, and in that, if said first mailbox is empty, said external resource server task is blocked while awaiting to receive a new message.

7. The method as claimed in one of the preceding claims,
characterized in that said external resource server task completely processes a request before taking the following request into account irrespective of the priority of the caller tasks.

8. The method as claimed in claim 6 or 7,
characterized in that the internal resource server task consists in a random number distributor task depositing the random numbers in a second mailbox, in that the tasks wishing to obtain a number set themselves to reception on said second mailbox, in that, if said second mailbox is empty, said caller tasks are blocked while awaiting to be able to extract a number and continue execution, and in that, when said second mailbox is full, the aforesaid distributor task blocks while awaiting to be able to deposit a new number.

9. The method as claimed in one of claims 3 to 8,
characterized in that the aforesaid cyclical task uses an event which it triggers at each new cycle, said cyclical task using three primitives, namely :
- a first primitive to know what state said event is in,
- a second primitive to set it to the occurred state,
- a third primitive to set it to the non-occurred state.

10. The method as claimed in one of the preceding claims, characterized in that the route of each of said concurrent tasks comprises common obstacles managed as a non-sharable resource and each of said obstacles can only be overcome by one concurrent task at a time, and in that, upon arrival at an obstacle, each concurrent task requests access to the corresponding resource by means of a first primitive and at the end of said obstacle frees the resource it was occupying, by means of a second primitive.

11. The method as claimed in claim 10,
characterized in that a concurrent task may overcome a busy obstacle without waiting for it to be freed, further to the random obtaining of a bonus, e.g. when said cyclical task displays a given status.

12. The method as claimed in one of the preceding claims,
characterized in that at the end of its route, each concurrent task incribes its name in a register which is permanently consulted by said driver task for detecting the end of an operation phase, so as to relaunch a new one.

13. The method as claimed in one of the preceding claims,
characterized in that the leading concurrent tasks are ranked by order of arrival by said driver task, whereas no distinction is made between the trailing concurrent tasks.
